# EUROPEAN PATENT APPLICATION

(11) **EP 2 371 431 A1**
(43) Date of publication of application: **05.10.2011**
(21) Application number: 11250271.1
(22) Date of filing: 09.03.2011
(51) Int. Cl.: A63F 13/02

(54) **Game control and exercise system**

(30) Priority: 09.03.2010 GB 1003875; 15.09.2010 GB 1015377
(71) Applicant: Marahta, Amrick Lal, Staines, Middlesex TW18 4YD (GB)
(72) Inventor: Marahta, Amrick Lal, Staines, Middlesex TW18 4YD (GB)
(74) Representative: Whitaker, Iain Mark

(57) **Abstract**

The present invention provides, inter alia, a game control system that comprises: a floor-standing exercise frame, the exercise frame having one or more game control switches; a motion sensing means for control of an external games system; and a control interface having a processor that integrates the control signals from the game control switches with control signals from the motion sensing means synchronising/ co-ordinating them with the external games system controls to control game-play.

## Description

### Field of the Invention

The present invention concerns exercise equipment and further concerns game control apparatus for controlling computer game play.

### Background to the Invention

As human society in the UK, USA and other developed countries becomes ever-more dependent upon computers for both business and leisure purposes we have become increasingly sedentary in our life-styles and there is understandably a high level of scientific and political concern over the diminishing role of physical activity in our lives. The current rising obesity epidemic is in part attributable to poor dietary habits but also to the collapsing levels of physical activity across our society as a whole, with particularly worrying extremes in the younger generation. Amongst children presently of school age the proportion of their day spent in sport, physical play or other physical activities is on average a fraction of that had by their parents. Television, internet usage and computer games take up the major part of many teenagers or pre-teens home lives and traditionally entail being seated/ slouching for hours at a time with only the fore-arm and hand of the child experiencing any exercise as it depresses the keys of a keyboard or keys/ buttons or joystick of a game control pad or the like.

Partly in response to this major social problem, but primarily to inject a new level of fun into game-play, a number of games manufacturer's have sought to bring greater bodily physical activity to computer game-play and introduced game control hardware and software that can exercise more than just the player's fore-arm and hand. A high profile example of this is the much-praised Nintendo Wii^{(R)} and its Wii-fit^{(R)} software and balance-board peripherals that encourage owners to practice a range of exercises in a fun games console-interactive manner. The basic Wii^{(R)} system comprises a console and a hand held remote unit in the shape of an elongate wand/ pointing device. The remote incorporates IR sensors at the tip to pick up infrared beams from an IR emitter array of the console so that the remotes position in 3D space can be determined relative to the console and the remote further has built-in accelerometers responsive to the motion of the user's hand carrying the remote. An auxiliary remote known as 'Nunchuk' may also be used with the Wii^{(R)} remote to provide conventional button-type games triggers. The basic Wii^{(R)} system gives the user a potentially greater range of motion than traditional games systems, allowing the user to partially mimic the motions in golf, tennis et cetera and thus can provide a better level of exercise. The Wii Fit^{(R)} add-on package extends the exercise value of the system somewhat by incorporating an auxiliary pressure-sensitive mat for the user to stand on while performing a number of simple exercises. The Wii Fit^{(R)} system allows for a number of simple exercises but is not well suited to exercising the core/ abdominal region of the body.

Others have proposed apparatus for bodily computer games interaction to encourage exercise and/or to provide ever-more immersive virtual reality type game control experiences. There are a substantial number of earlier patents and patent applications for game controllers built into large static gym equipment such as Stairmasters^{™}, bench presses and running machines and complex suspended cradles, stands and games chair structures that allow the user to move their whole body while seated, standing or hanging. These include, amongst others, PCT WO 2007089078 (Jun-Sun Park), US 7, 335, 134 (Richard Lavelle), US 200582632 (Robert James-Herbert) and PCT WO 9813107 (Hans Jurgen-Kramer). In general these systems are very bulky and expensive and best-suited to gyms or arcades and certainly not suited to wide-spread domestic ownership in a way that might address the general health issues discussed above.

Thus on the one hand the known prior art includes popular home gaming systems such as the Wii-fit^{(R)} system with its motion-sensitive hand held remote unit and pressure-sensitive mat and on the other hand there are proposals for expensive complex seat or suspended cradle or other static gym equipment structures for exercising or providing immersive virtual reality type game control experiences.

There still remains a need for a relatively low-cost solution that provides a higher level of physical activity and core body exercise value than the current Wii-fit^{(R)} system yet avoiding the bulk, cost and complexity of the various interactive exercise systems described in the patent proposals to date. There especially remains a need for a system that provides the user with a high level of game control interactivity when using exercise frames - rather than the frame merely interacting with digital games solely via motion sensors and thus restricting the user's freedom of movements within games. Lack of extensive game control switches in existing interactive exercise frames limits user control of digital game play, this also forces game development companies to produce fitness games that dictate the pace of the game as opposed to the user determining this for themselves as they usually would using a standard gamepad.

### Summary of the Invention

According to a first aspect of the present invention there is provided a game control and exercise system that comprises: a floor-standing exercise frame, the exercise frame having one or more game control switches to generate game control signals, the frame having a dock that de-mountably holds in use a unit of an external games system; and a control interface having a processor that integrates the control signals from the game control switches with control signals from a motion sensing means that senses motion of a part or whole of the frame synchronising/ co-ordinating them with the external games system controls to control game-play, the unit being a handheld device with a processor whereby the frame with the unit docked to it may control one or more aspects of game play on the games system by the sensed motion of the part or whole of the frame by the motion sensing means and by the operation of the one or more game control switches.

Particularly preferably the control interface is in or on the frame and preferably is incorporated in the dock.

The unit is a handheld device with a processor. It is not a joystick or like peripheral that just monitors axes of restricted small localized movement of an element such as a rod or tracker ball. In the case of console-based systems it is a portable remote unit that is configured to transmit or reflect to the console signals relating to its location in the space of a room. In other embodiments the unit may have a processor and a screen and be configured for gameplay. In such embodiments the unit may be an iPhone^{(R)} or iPod Touch^{(R)} or other smartphone, PDA or handheld computing device configured to play computer games.

In one embodiment the motion sensing means may comprise one or more accelerometers that are incorporated in the exercise frame and may, for example, be part of the structure of an existing exercise bicycle where the frame is modified to incorporate the one or more game control switches. In a further embodiment the motion sensing means may comprise a camera of the external games system (eg for the Microsoft Kinect/ Kinetic or Sony PS Move) and may be in a console of the external games system. In the latter case the console of the external games system forms part of the interactive exercise system. The control interface here may be provided at/ locally connected to the console while the one or more game control switches of the frame are preferably coupled to a transmitter in/on the exercise frame to communicate wirelessly with a receiver at the control interface. Such wireless communication may comprise infra-red, Bluetooth ^{(R)} or other near-field communications.

The motion sensing means is particularly preferably a motion-sensing portable/ remote unit of the external games system and the frame has a dock that de-mountably holds in use the motion-sensing unit of the external games system whereby the apparatus may control one or more aspects of game play on the games system by the sensing of motion by the motion-sensing unit.

The dock is a socket/ receptacle that is suitably of a size, shape and form adapted to securely accommodate the motion-sensing unit in use so that it will remain securely in place while exercising and yet allowing the unit to be demounted with ease after use. The dock may have a latch at the front rim of the socket to releasably hold the motion-sensing unit or may simply have a reasonably tight friction fit rim and/ or inner-wall to the socket to prevent the unit from dropping out or being dislodged by the rocking motion.

The motion sensing unit may, for example, comprise the remote unit of a Wii^{(R)} system, thus enabling the apparatus of the present invention to very simply and cost-effectively extend the capabilities of a games console system that is already owned in many homes in the UK and US. The frame may be further adapted with a dock to also hold a Wii^{(R)} system Nunchuk^{™} or other conventional gaming remote compatible with the gaming system with selection (or variable function) control buttons/ joy-stick and/ or trigger and presenting that remote with the controls facing towards the user lying in the frame.

The one or more game control switches built into the frame may, for example, comprise selection (or variable function) control buttons, a joy-stick and/ or trigger.

The one or more game control switches suitably is/ are linked to the dock for the motion-sensing unit, the dock incorporating an electrical connector to communicate uni-directionally or bi-directionally with the motion-sensing unit.

As noted above the system incorporates a unique control electronic interface means (circuit/processor) that enables effective communication and co-ordination of control of game-play between the controller of the frame and the controller of the motion-sensing unit of the external games system. This enables the control signals of the frame's game control switches and EMR sensor array to be combined with the motion-sensing signals from the docked motion-sensing unit and, for console-based systems such as the Wii and PS3, the output control signals to be transmitted (by wire or normally wirelessly) by the motion-sensing unit to the console.

The electronic control interface means in the preferred embodiment comprises a custom made PCB board and processor chip which acts as the core of the system, powered by a battery pack or other power supply, the electrical connector (connecting to the motion-sensing unit), trigger, joystick, directional control buttons and speakers all connecting and synchronising/ co-ordinating with the external games system via the PCB board.

A battery may be built into the frame to power the game control features or the frame may be coupled to a mains power supply (preferably through a transformer or circuit breaker or other safety protector. Particularly preferably an energy harvesting facility may be built into the frame to capture ambient light energy (eg by solar cells) or other energy. Preferably the apparatus may capture kinetic energy from rocking of the frame, having a magnet and a coil that move relative to each other as the frame rocks.

In a preferred embodiment the frame may further comprise an Electromagnetic Radiation (EMR) sensor array that is preferably positioned to face towards the console of the external games system in use. This suitably corresponds to an EMR emitter array of the external games system. In the case that the external system is a Wii^{(R)} system, the sensor array is an IR sensor array equivalent to the array on the Wii^{(R)} remote/ wand. This replaces the functioning of the IR sensor array on the Wii^{(R)} remote/ wand when the latter is fitted to the dock in case in that location the sensor array on the Wii^{(R)} remote/ wand is not able to function.

Preferably an upstanding portion of the frame is arched, having a spanning portion that extends from the user's left to right hand sides and which incorporates at least one of: i) the dock; and (where present) ii) the game control switch(es) ; and (where present) iii) the EMR sensor array.

Thus suitably at the top of the frame is the spanning portion/ handlebar incorporating an adaptable input port (the dock with connector) to hold and connect to an external gaming controller/ remote unit. The dock with connector suitably faces towards the user and is substantially centred across the width of the frame. The sensor array on the spanning portion/ handlebar suitably is also substantially centred across the width of the frame but faces in the opposite direction, away from the user and towards an emitter array (usually in the console of the external games system).

Preferably the frame incorporates a head-rest, suitably padded, in the part of the base portion that passes behind the user. This aids comfort and also improves the user's posture for viewing the screen of the gaming system. A floor mat may also be provided as a part of the apparatus attached to the frame - most notably where the exercise frame is to be used with the user seated or lying on the floor, such as, for example, where the frame is a rocking frame apparatus that allows the user to perform rocking exercises that are a type of controlled "sit-up" or "ab-crunch..

In the preferred embodiment the frame may further incorporate a speaker, or a pair of speakers that are respectively to the left and right of the user in use.

According to a further aspect of the present invention there is provided an interactive exercise device that comprises:
a floor-standing exercise frame (such as, for example an exercise bicycle, an elliptical glider, ski machine or abdominals exercise frame), the exercise frame having one or more game control switches and a transmitter to transmit signals from the one or more game control switches to an external games system; and
a control interface having a processor that integrates the control signals from the game control switches with control signals of the external games system, synchronising/ co-ordinating them with the external games system controls to control game-play.

In a third aspect of the invention there is provided an interactive exercise device that comprises:
a floor-standing exercise frame (such as, for example an exercise bicycle, an elliptical glider, ski machine or abdominals exercise frame), the exercise frame having mounted thereto in use one or more game control switches to control game-play on an external games system; and
a motion-sensing portable/ remote unit of the external games system and the frame has a dock/ receptacle that de-mountably holds in use the motion-sensing unit of the external games system whereby the apparatus may control one or more aspects of game play on the games system by the sensing of motion of the exercise frame by the motion-sensing unit.

The apparatus is widely compatible with a variety of provider's motion-sensing gaming platforms, such as that under development by Microsoft, the Apple iPhone^{(R)} and iTouch^{(R)} as well as the Nintendo Wii^{(R)}. The dock may be designed to fit a particular system's remote unit or may be adjustable to fit different system's units, as required.

In a simple alternative aspect of the present invention the system may comprise simply an exercise frame with a dock/ receptacle for an external game control device, eg Wii remote or iPhone whereby docking the external game control device in a receptacle of the frame without neccessarily having other controls on the frame or synchronising with any controls provides the ability to sense movement of the frame and thus provide control of game-play.

In summary, the apparatus is an inexpensive practical exercise machine which enables the user to exercise while at the same time playing a variety of digital games. Such games may be generic and simply use the frame's motion as a trigger or may be created and customised to thematically tie in with virtual actions that, for example, involve exercising the abdominal region of the body. The user is further able to use the functionality of a joystick, trigger and buttons on the frame to enhance the game-play experience. The motion-sensitive interactive gaming functionality may be achieved inexpensively without need to hardwire such functionality into the apparatus.

### Brief Description of the Drawings

A preferred embodiment of the present invention will now be more particularly described by way of example with reference to the accompanying drawings, wherein:
**FIG. 1** is a perspective view of the apparatus from one side with the base of the frame standing on the ground and showing a user in situ, lying supine with head resting on the headrest part of the frame and gripping the handle bar while facing towards the handlebar and towards a screen of a gaming system;
**FIG. 2** is a perspective view of the apparatus from below (but excluding the remote unit dock for convenience) and **FIG. 2A** is an inset view detailing a trigger switch on the handlebar while **FIG. 2B** is an inset view detailing a power ON/OFF button, a joystick and selection (or variable function) control buttons on the handlebar;
**FIG. 3** is a further perspective view of the apparatus from below but showing the remote unit dock and **FIG. 3A** is an inset view detailing the dock on the handlebar as configured to receive and hold a Wii^{(R)} remote/ wand, while **FIG. 3B** is an inset view detailing the dock on the handlebar instead configured to receive and hold the forthcoming PS3 motion sensor remote;
**FIG. 4** is a further perspective view of the apparatus from below showing the remote unit dock for an Apple iPhone or iPod touch^{(R)} and FIG. 4A is an inset view detailing the dock ;
**FIG. 5** is a further perspective view of the apparatus from above, similar to Figure 1 but showing the EMR sensor array;
**FIG. 6** is a block diagram of the connections of the electronic elements of the apparatus; and
**FIG. 7** is a more detailed electronic circuit diagram of the apparatus.

### Description of the Preferred Embodiment

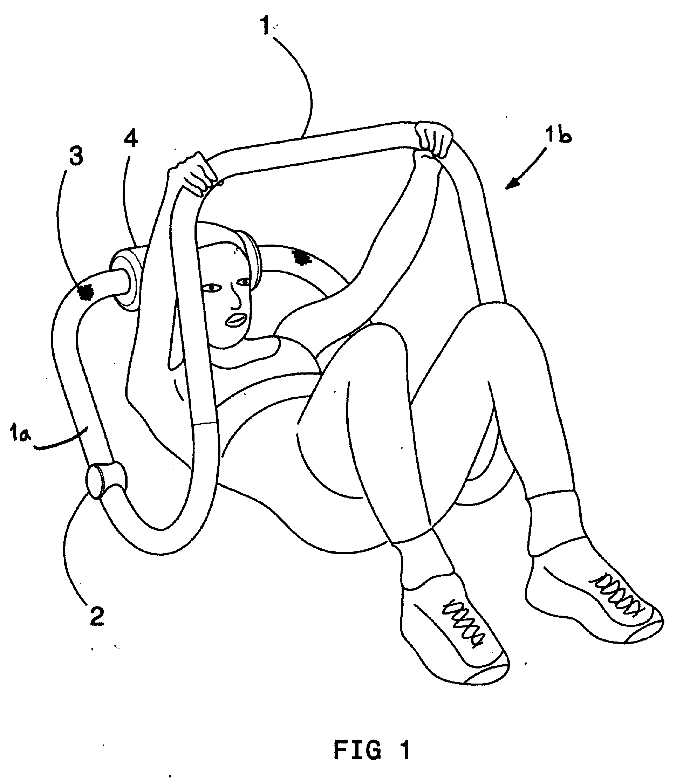

Referring firstly to Figure 1, the apparatus comprises a floor-standing rocking exercise frame 1 having a base portion 1 a and an arched upstanding portion 1b. The base portion 1 a lies on the floor when the frame 1 as a whole is at rest while the upstanding portion 1b is upright when the frame is at rest.

The base portion 1a of the frame 1 is adapted to pass around behind the user from the user's left to right hand sides while the arched upstanding portion 1b pass over the user from the user's left to right hand sides. The whole frame 1 takes the form of a continuous loop of tubing that is folded over, being bent so that it has an approximately C-shaped profile as viewed side-on. The bend serves a rocker section between the base portion 1 a and arched upstanding portion 1b to allow the frame 1 to be rocked back and forth. The part of the base portion 1 a of the frame 1 that is adapted to pass around behind the user is provided with a thick headrest cushion 4 that may comprise thick elastomeric foam outer tubing that is itself covered with a hard wearing outer membrane.

Where the loop of the frame 1 defines an arched upstanding portion 1 b most of the upper part of the upstanding portion 1b of the frame 1 including most of the portion that spans over the user's body is suitably ensheathed and protected by an elastomeric foam outer tubing with a hard wearing outer membrane similar to the headrest but less thick provide comfortable hand grip positions. Here a user may grip the frame 1 as shown in Figure 1, to rock the frame1 back and forth while raising and lowering their torso from a substantially supine posture to a more upright seated posture to exercise the core body region including the abdominal and oblique muscles.

The tubing is segmented to allow it to be disassembled to a more compact form if required. It also has a pair of pivots 2 on the opposing sides of the frame close to the bend that may be loosened to allow collapse of the frame 1. The tubing is suitably a flattened steel tubing but may be unflattened and/ or of aluminium or other robust metal/ alloy or even formed as moulding of a suitable robust plastics polymer.

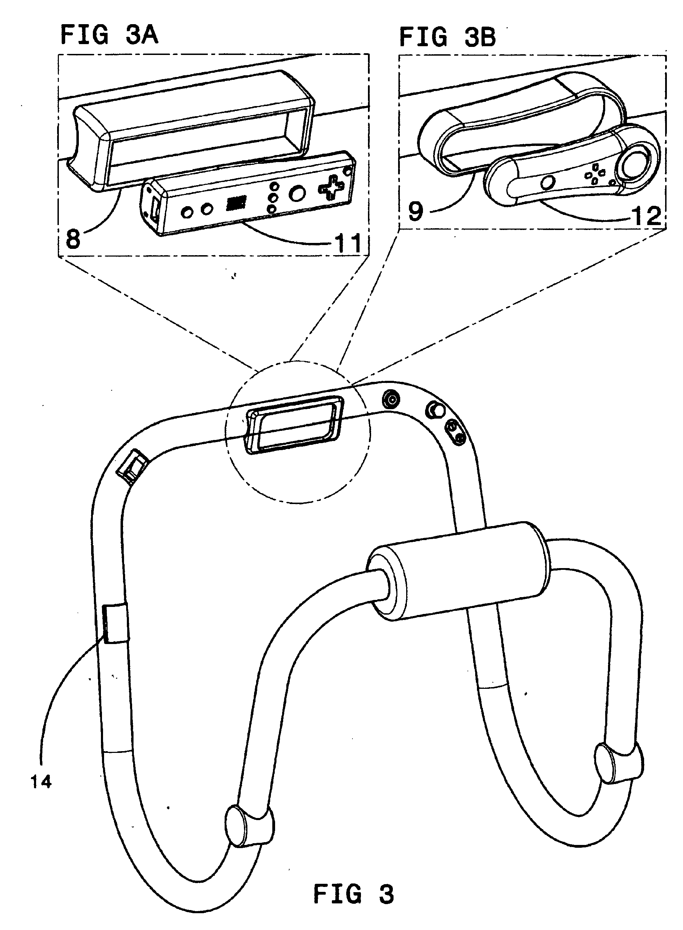

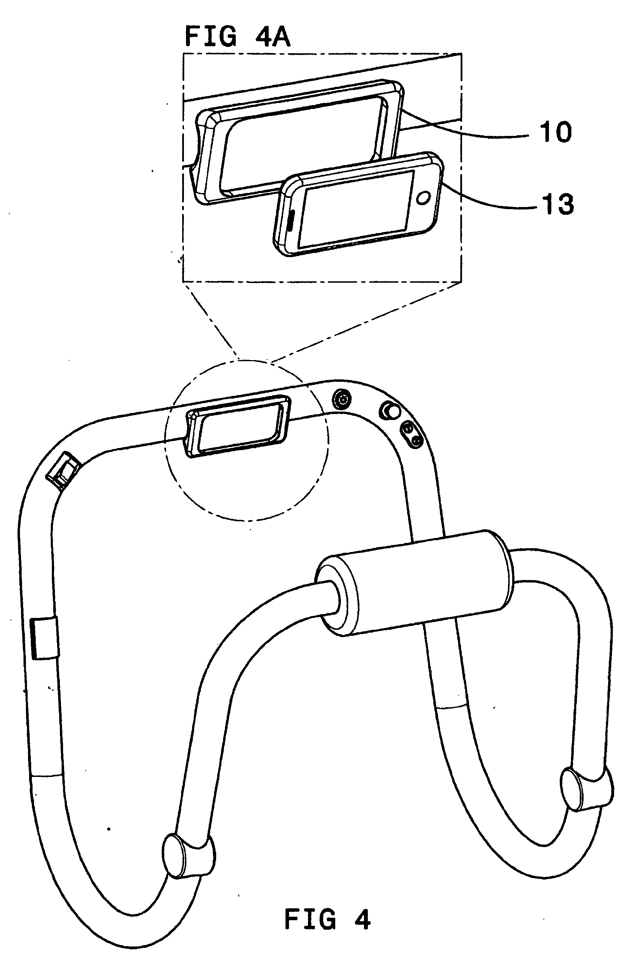

The upper part of the frame's upstanding portion 1b that serves as a handle bar spanning over the user's body incorporates a key part of the componentry for the game control function of the frame. It is here that the motion-sensing unit 11, 12, 13 of an external games system is mounted to the frame 1, as best illustrated in Figures 3, 3A, 3B, 4 and 4A. Such motion-sensing unit 11, 12, 13 is exemplified by the motion-sensing remote unit ("wand") of a Wii^{(R)} system; the equivalent newly-developed remote unit of a PS3^{(R)} system; or even an iPhone^{(R)} or iPod Touch^{(R)}. Though the latter two may lack wirelessly linked consoles and screens they are, when playing appropriate games software, still motion-sensing units of their own self-contained games systems.

The motion-sensing unit 11, 12, 13 is mounted to the handlebar part of the frame's upstanding portion 1b by provision of a dock 8, 9, 10. The dock 8, 9, 10 is a socket that is of a size, shape and form adapted to securely accommodate the respective motion-sensing unit 11, 12, 13 in use so that it will remain securely in place while exercising and yet allowing the unit 11, 12, 13 to be demounted with ease after use. The dock 8, 9, 10 may have a latch at the front rim of the socket to releasably hold the motion-sensing unit or may simply have a reasonably tight friction fit rim and/ or inner-wall to the socket to prevent the unit 11, 12, 13 from dropping out or being dislodged by the rocking motion.

The dock 8, 9, 10 thus de-mountably holds in use the motion-sensing unit 11, 12, 13 of an external games system whereby the apparatus may control one or more aspects of game play on the games system by the sensing of motion by the motion-sensing unit 11, 12, 13.

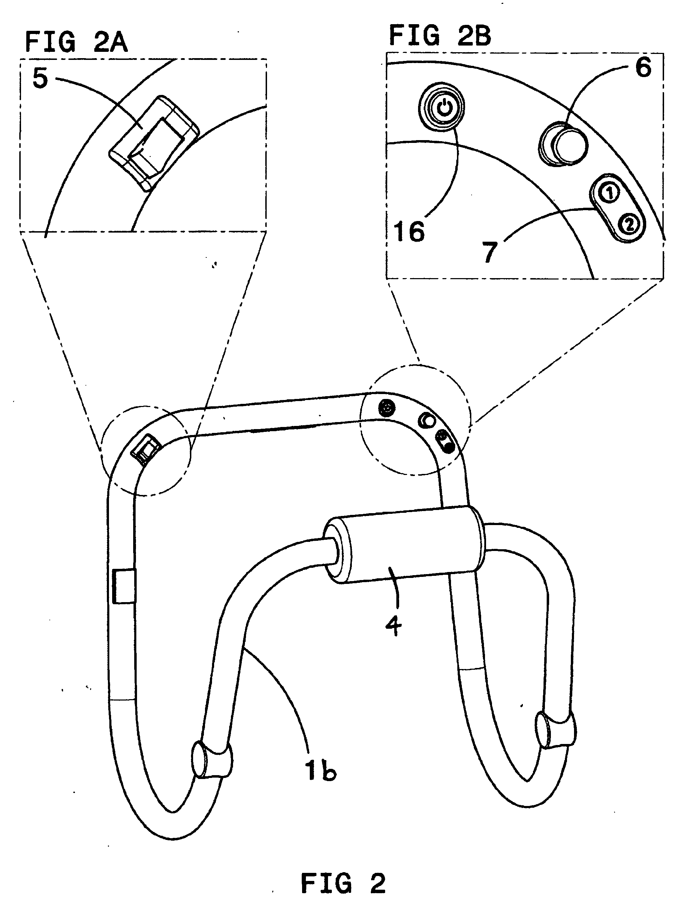

As can be seen in Figures 1, 2, 2A and 2B, the frame 1 has built into it a set of game control switches that include selection (or variable function) control buttons 7, a joy-stick 6 and trigger 5 and which are linked to the dock 8, 9, 10. The dock 8, 9, 10 incorporates an electrical connector 20 to communicate with the fitted motion-sensing unit 11, 12, 13.

A battery compartment 14 (see Figure 3) is built into the frame 1 to power the game control features or the frame 1 may be coupled to a mains power supply through a transformer or circuit breaker or has an energy harvesting facility built into the frame 1 to capture ambient light energy (eg by solar cells) or kinetic energy from rocking of the frame 1.

An Electromagnetic Radiation (EMR) sensor array 15 is provided centrally on the handlebar part of the frame 1 positioned to face towards the console of the external games system in use and corresponds to the EMR emitter array of the external games system. In the case that the external system is a Wii^{(R)} system, the sensor array 15 is an IR sensor array equivalent to the array on the Wii^{(R)} remote/ wand 11. This replaces the functioning of the IR sensor array on the Wii^{(R)} remote/ wand 11 when the latter is fitted to the dock 8 since in that location the sensor array on the Wii^{(R)} remote/ wand 11 is not able to function. The frame 1 further incorporates a pair of speakers 3 that are respectively to the left and right of the user in use fitted either side of the headrest 4.

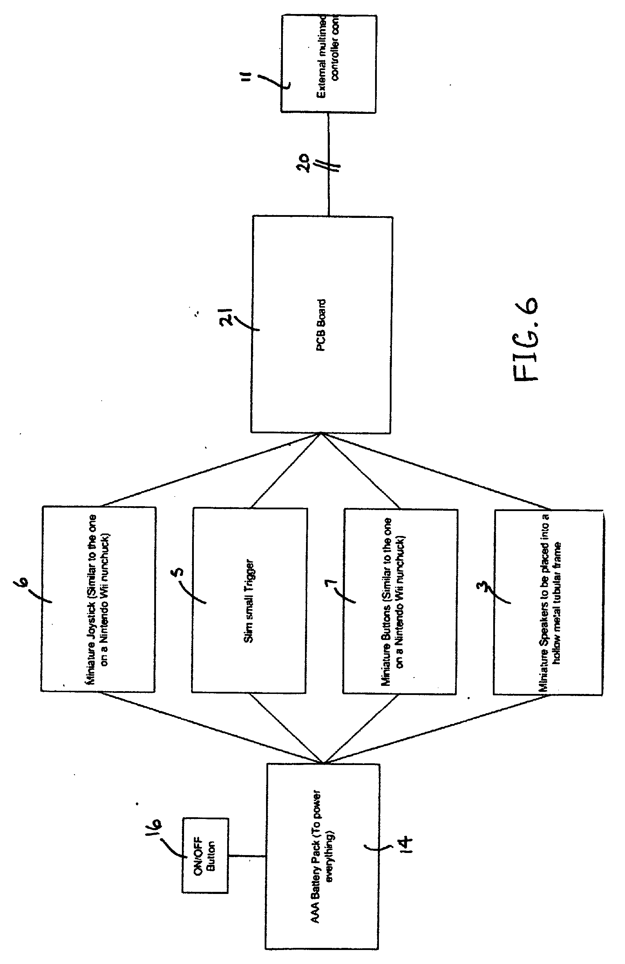

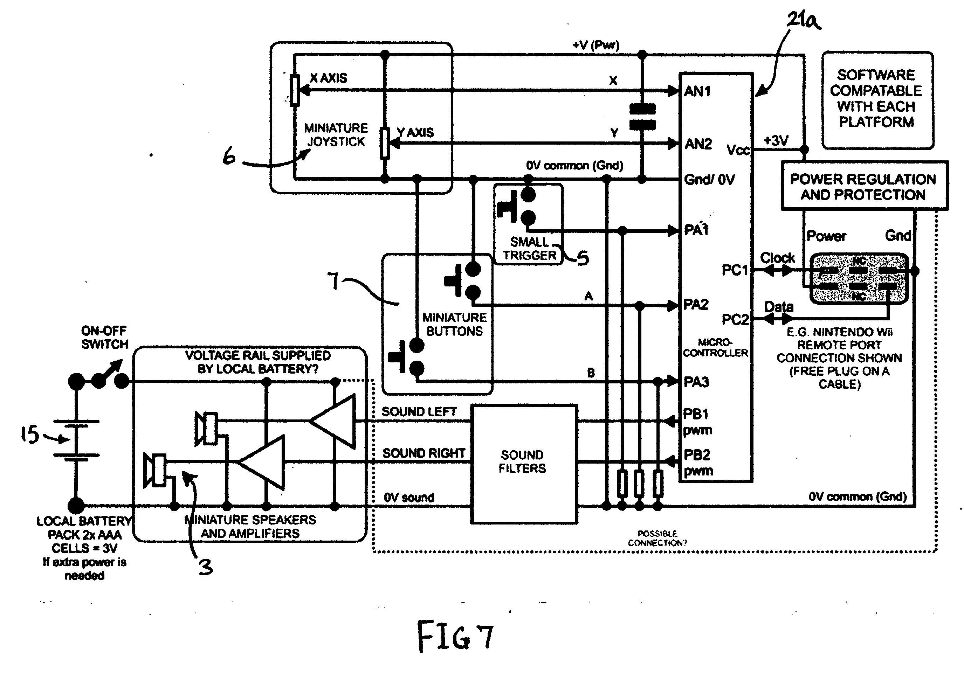

As shown in Figures 6 and 7, the frame further incorporates in or near the electrical connector 20 a unique electronic interface 21 comprising a circuit with a processor that enables effective communication and co-ordination of control of game-play between the controller of the frame and the controller of the motion-sensing unit of the external games system. This enables the control signals of the frame's game control switches and EMR sensor array to be combined with the motion-sensing signals from the docked motion-sensing unit and, for console-based systems such as the Wii and PS3, the output control signals to be transmitted (by wire or normally wirelessly) by the motion-sensing unit to the console.

The electronic interface comprises a custom made PCB board and processor chip 21 a which acts as the core of the system, powered by a battery pack 14 or other power supply. The electrical connector 20 connects processor chip 21 a to the motion-sensing unit 11, 12, 13 and the processor chip 21 a also has connected to it the EMR sensor array 15, the trigger 5, the joystick 6, the selection (or variable function) control buttons 7 and the speakers 3. These are all connected and synchronised/ coordinated with the external games system via the PCB board and processor chip 21a. In a preferred embodiment the processor 21a of the electronic interface 21 monitors clock and data signals from the motion sensing unit and receives the signals from the frame's game control switches 5, 6, 7 and EMR sensor array 15 and synchronises them to the signals from the motion sensing unit 11, 12, 13 and then exports the control signals to the docked motion-sensing unit to be used thereby and/ or, for the console-based systems, to be transmitted to the console to be used thereby for controlling the game play.

The rocking frame apparatus 1 allows the user to perform rocking exercises that are a type of controlled "sit-up" or "ab-crunch" that will through regular use dramatically improve the user's core body strength and overall fitness. The apparatus allows the user to carry out such exercise while interactively using the exercise as part of game-play thereby making exercise less tedious and game-play more beneficial to the bodily health of the user.

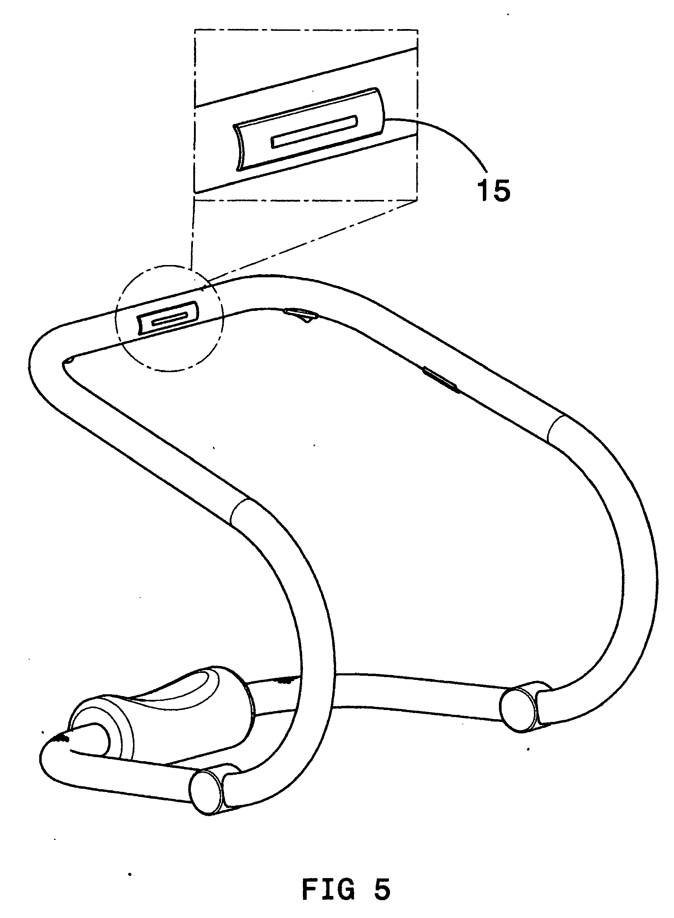

The present invention has been described above with respect to a particularly preferred embodiment. In further arrangements the motion-sensing unit may be integrated into the frame. Also, the frame as shown in Figure 5 might be configured with an EMR emitter or a transmitter rather than sensor and be thereby able to communicate control signals from the game control switches to an external games console such as, for example, the Microsoft Kinetic (ex-Project Natal) games system which uses a high tech camera at the console for game control. The control signals may be transmitted from the emitter on the frame to the console and thereat received by a receiver and processed by a control interface linked to the console for synchronising/ co-ordinating with the external games system

In an aspect of the invention, motion sensor signals generated from the movement of the exerciser itself are synchronised with the game control switches enabling a new means of interacting with games. The motion sensor may in some embodiments be a part of the exercise apparatus/ frame and the movement sensed may be one or more aspects of movement in or of the exercise apparatus/ frame such as, for example, rotary movement of the pedal axle of a cycle machine or reciprocating movement of part of a rowing machine or movement of the apparatus as a whole, as in a rocking machine. In one example, a person may walk into gym with their iPhone, dock the iPhone into a dock on a cycle machine modified to receive the iPhone, turn on a game on the iPhone and have the game interact with the signals sensed by the cycle machine's own sensors. The cycle machine may be adapted to have game controls integrated into it and the sensed motion of the pedals moving round combined with the game control switches will control the game from the iPhone that is connected to the exerciser. For this or other embodiments the game control signals from the game control switches may be combined with motion-sensing signals from motion sensors of the exercise frame/ device itself or motion-sensing signals from motion sensors of the external game system or both.

Where the exercise frame/ device is configured to generate exercise-related data - basic stats such as, for example, reps performed thusfar or speed or calculated stats such as calories burnt or other sensed data/ medical data such as heart rate, blood pressure et cetera, it is a preferred further feature of the invention to integrate such data signals into the game-play eg. to provide a common display of game and data. Indeed, the exercise-related data/ health data may be integrated into the game-play as a game control factor that influences the course of the game. The exercise-related data/ health data signals may be combined with the signals from the game control switches to thence control game-play or be displayed alongside a game visual. Exercise-related data/ health data signals from the exerciser or sensors worn by the user, signals from game control switches, motion signals (generated from either the external game control device, or the exerciser, or both), may all be combined to enable the user to interact with games or fitness programmes using and combining all the elements above. As an example of this arrangement, a person may walk into a gym with an iPhone and dock it into a receptacle in the cycle machine, turning on a game or digital fitness product. The cycle machine with game controls integrated into it and the motion of the pedals moving round combined with the signals of the game control switches, combined with the exerciser-related data/ health data (eg. heart rate, calories burned) that the cycle machine generates with its on-board processor, will not only enable the user to interact with the game, but whilst the iPhone/external device is connected, it also synchronises/ combines the data generated (such as calories burned etc) into the digital application/game. Thus the device, whether it be an iPhone, or a Wii remote (in which latter case everything would be transmitted to the external console wirelessly) enables the user to monitor how many calories they have burned/ their performance etc whilst also playing a game. For such systems the apparatus may alternatively be referred to as an interactive exercise system, since for some purposes it may control exercise applications rather than games.

## Claims

1. A game control and exercise system that comprises: a floor-standing exercise frame, the exercise frame having one or more game control switches to generate game control signals, the frame having a dock that de-mountably holds in use a unit of an external games system; and a control interface having a processor that integrates the control signals from the game control switches with control signals from a motion sensing means that senses motion of a part or whole of the frame synchronising/ co-ordinating them with the external games system controls to control game-play, the unit being a handheld device with a processor whereby the frame with the unit docked to it may control one or more aspects of game play on the games system by the sensed motion of the part or whole of the frame by the motion sensing means and by the operation of the one or more game control switches.

2. A game control and exercise system as claimed in claim 1, wherein the motion sensing means is part of the handheld device.

3. A game control and exercise system as claimed in claim 1 or 2, wherein the control interface is in or on the exercise frame.

4. A game control and exercise system as claimed in claim 1, 2 or 3, wherein the motion sensing means is incorporated in the exercise frame.

5. A game control and exercise system as claimed in any preceding claim, wherein the motion sensing means comprises one or more accelerometers.

6. A game control and exercise system as claimed in any preceding claim, wherein the dock is a socket that is configured to securely accommodate the unit in use so that it will remain securely in place while exercising and yet allowing the unit to be demounted with ease after use.

7. A game control and exercise system as claimed in any preceding claim in combination with a unit of an external games system wherein the unit comprises: a remote unit of a Wii^{(R)} system; a remote unit of a PS3^{(R)} system; an iPhone or iPod Touch^{(R)} or other smartphone, PDA or handheld computing device configured to play computer games.

8. A game control and exercise system as claimed in any preceding claim, wherein the frame incorporates a battery or other electrical energy supply means to power the game control features.

9. A game control and exercise system as claimed in claim 8, wherein the electrical energy supply means comprises an energy harvesting facility to capture ambient light energy or kinetic energy from moving of the frame.

10. A game control system and exercise as claimed in any preceding claim, wherein the frame incorporates an EMR sensor array for controlling game-play.

11. A game control system and exercise as claimed in any preceding claim, wherein an upstanding portion of the frame is arched, having a spanning portion that extends from the user's left to right hand sides and which incorporates the dock.

12. A game control system and exercise as claimed in claim 11, wherein the spanning portion/ handlebar incorporates the one or more game control switches.

13. A game control and exercise system as claimed in any preceding claim, wherein the control interface processor is configured to take the control signals of the frame's game control switches and to combine them with the motion-sensing signals and, for console-based systems, for the output control signals to be transmitted by the unit to the console.

14. A game control system and exercise as claimed in any preceding claim, wherein exercise-related data/ health data signals from the exerciser or sensors worn by the user, signals from game control switches and/or sensed motion signals are combined in use to control game-play or be displayed alongside a game visual.

15. A game control and exercise system as claimed in any preceding claim, wherein the exercise frame comprises a floor-standing rocking exercise frame having a base portion with a rocker section, the base portion of the frame being adapted to pass around behind a user from their left to right hand sides, the frame having an upstanding portion with hand hold that a user may grip to rock the frame and having the dock therein.
